# EUROPÄISCHE PATENTSCHRIFT

(11) **EP 0 690 249 B1**
(45) Veröffentlichungstag und Bekanntmachung des Hinweises auf die Patenterteilung: **25.10.2000**
(21) Anmeldenummer: 95109006.7
(22) Anmeldetag: 12.06.1995
(51) Int. Cl.: F16H 63/30

(54) **Rückwärtsgang-Schaltvorrichtung für ein Kraftfahrzeug-Wechselgetriebe**
Reverse gear control mecanism for change speed transmission of motor vehicles
Dispositif de commande de marche arrière pour boîte de vitesses d'un véhicule automobile

(30) Priorität: 28.06.1994 DE 4422427
(43) Veröffentlichungstag der Anmeldung: 03.01.1996
(73) Patentinhaber: Ford-Werke Aktiengesellschaft, 50735 Köln (DE); FORD MOTOR COMPANY LIMITED, Brentwood, Essex CM13 3BW (GB); FORD FRANCE SOCIETE ANONYME, 92506 Rueil Malmaison Cedex (FR); Ford Motor Company, Dearborn Michigan 48126 (US)
(72) Erfinder: Bernhardt, Bodo, D-50769 Köln (DE); Steffens, Klaus, Dr., D-52072 Aachen (DE)
(74) Vertreter: Messulam, Alec Moses

(56) Entgegenhaltungen:
- DE-A- 2 336 250
- DE-A- 2 930 151
- DE-A- 2 933 794
- DE-A- 4 128 834
- US-A- 4 221 283
- US-A- 4 601 369

## Beschreibung

Die Erfindung bezieht sich auf eine Rückwärtsgang-Schaltvorrichtung für ein Kraftfahrzeug-Wechselgetriebe der im Oberbegriff des Patentanspruches 1 erläuterten Art.

Aus der DE-A-29 33 794 ist eine Rückwärtsgang-Schaltvorrichtung für ein Kraftfahrzeug-Wechselgetriebe der im Oberbegriff des Patentanspruches 1 erläuterten Art bekannt.

Bei dieser bekannten Rückwärtsgang-Schaltvorrichtung betätigt ein Teil der Schaltvorrichtung einen Schalter, der für eine bestimmte Zeitspanne eine Hilfskraft auf eine Servo-Einrichtung einwirken läßt, die eine auf die nachlaufende Getriebewelle einwirkende Bremsvorrichtung betätigt.

Der von einem Teil der Schaltvorrichtung betätigte Schalter liegt hierbei im Bereich der von dem Schalthelbel betätigten Schaltwelle und wird beim Anwählen der Ebene des Rückwärtsganges betätigt. Über einen Stromkreis, der ein Zeitschaltrelais beinhaltet, wird ein Elektromagnet erregt, dessen Anker eine Bremsvorrichtung von zweckmäßiger Bauart betätigt.

Die bekannte Rückwärtsgang-Schaltvorrichtung weist den Nachteil auf, daß die Anordnung des Schalters im Bereich der Schaltwelle aufwendiger und unter Umständen ungünstig zu montieren oder auszutauschen ist. Darüber hinaus ist das Vorsehen einer eigenen Bremsvorrichtung zum Abbremsen der nachlaufenden Getriebewelle teuer und platzraubend.

Aus der DE-A-23 19 397 ist eine Schaltvorrichtung für den Rückwärtsgang mit Abbremsung der Eingangswelle eines Kraftfahrzeug-Wechselgetriebes bekannt, bei der eine der nicht zum Schalten des Rückwärtsganges benützten Synchronisiervorrichtungen eines Vorwärtsganges als Bremsvorrichtung herangezogen wird.

Aus der DE-A-26 01 418 ist eine Schaltvorrichtung für den Rückwärtsgang mit Abbremsung der Eingangswelle eines Kraftfahrzeug-Wechselgetriebes bekannt, bei der ein an der Schaltkulisse angeordneter Schalter über ein elektrohydraulisches Ventil eine hilfskraftunterstützte Bremsvorrichtung betätigt, wobei bei der Auslegung des Schalters darauf geachtet wurde, daß er die Bremsvorrichtung nur beim Einrücken und nicht auch beim Ausrücken des Rückwärtsganges betätigt.

Das Ziel der Erfindung ist es, eine Rückwärtsgang-Schaltvorrichtung für ein Kraftfahrzeug-Wechselgetriebe der im Oberbegriff des Patentanspruches 1 erläuterten Art derart zu verbessern, daß eine vielseitigere Anordnung des erforderlichen Schalters möglich wird und als Bremsvorrichtung eine bereits im Getriebe vorhandene Einrichtung herangezogen wird. Darüber hinaus soll auch beim Einrücken eines Vorwärtsganges eine Schalthilfe bereitgestellt werden.

Gemäß der Erfindung wird dieses Ziel erreicht, indem eine Rückwärtsgang-Schaltvorrichtung für ein Kraftfahrzeug-Wechselgetriebe der im Oberbegriff des Patentanspruches 1 erläuterten Art die im Kennzeichenteil des Patentanspruches 1 aufgezeigten Merkmale aufweist.

Dadurch, daß der die Bewegung eines Teiles der Schaltvorrichtung umfassende Schalter unmittelbar an einem Ende der die Schaltbewegung ausführenden Schaltwelle angeordnet ist, kann dieser in einer für seine Wirkung günstigsten Lage angeordnet werden und neben der Bremswirkung für das Einrücken des Rückwärtsganges auch noch zusätzlich eine Schalthilfe beim Einrücken eines Vorwärtsganges zur Verfügung stellen.

Die Erfindung wird anhand eines in der Zeichnung gezeigten Ausführungsbeispieles näher erläutert. Es zeigt:
- Fig. 1: einen Teilschnitt durch ein Kraftfahrzeug- Wechselgetriebe mit einem unmittelbar an einer Schaltstange bzw. einer Schaltgabel angreifenden Elektromagneten;
- Fig. 2: einen Schnitt durch einen Teil des Kraftfahrzeug-Wechselgetriebes im Bereich der Schaltwelle mit einer Anordnung des Schalters im wesentlichen außerhalb des Getriebegehäuses;
- Fig. 3: eine schematische Ansicht einer Schaltkulisse mit Angabe der entsprechenden Schaltbereiche des Schalters und
- Fig. 4: eine Tabelle zur Erläuterung der die Schraffuren kennzeichnenden Schaltbereiche des Schalters in Fig. 3.

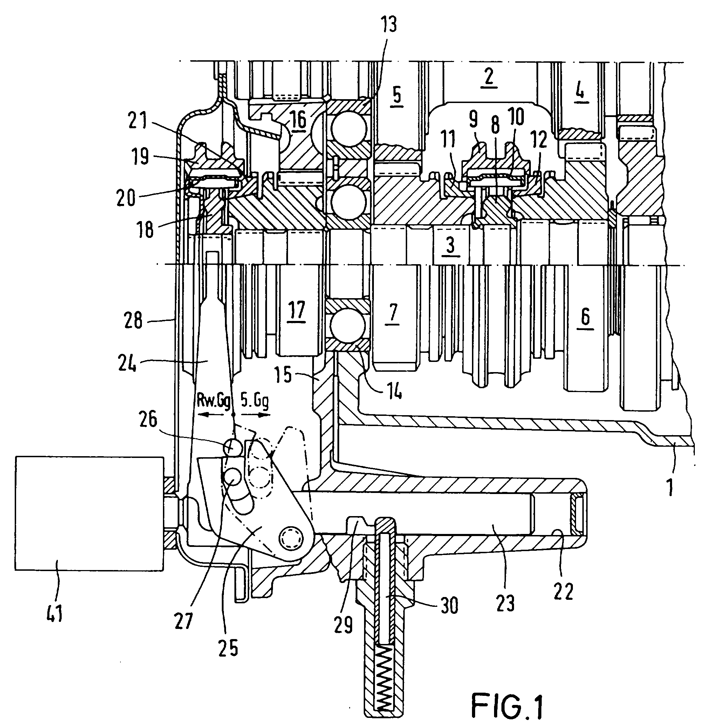

In dem in Fig. 1 gezeigten Teilschnitt durch ein Kraftfahrzeug-Wechselgetriebe sind in einem Getriebegehäuse 1 eine nur teilweise dargestellte Eingangswelle 2 und eine Vorgelegewelle 3 angeordnet. Auf der Eingangswelle 2 sind Festräder 4 und 5 und auf der Vorgelegewelle 3 sind Losräder 6 und 7 für den dritten und vierten Gang angeordnet. Zwischen den Losrädern 6 und 7 ist in herkömmlicher Weise eine Synchronnabe 8 mit einer Schiebemuffe 9 angeordnet, die über Synchronriegel 10 auf Sperr-Synchronringe 11 und 12 zum Schalten des dritten und vierten Ganges einwirken kann.

Nur in der vorliegenden Ausführungsform, bei der es sich um ein ursprünglich als 4-Gang-Wechselgetriebe konzipiertes Getriebe handelt, das nachträglich zu einem 5-Gang-Getriebe erweitert wurde, ist außerhalb der Lager 13 und 14 für die Eingangswelle 2 und die Vorgelegewelle 3 ein Zusatzgehäuse 15 angeordnet, in das hinein sich die Eingangswelle 2 und die Vorgelegewelle 3 im Falle eines 5-Gang-Getriebes erstrecken und wo auf der Eingangswelle 2 ein Festrad 16 und auf der Vorgelegewelle 3 ein Losrad 17 zum Schalten eines fünften Ganges angeordnet sind. Auf der Vorgelegewelle 3 ist wieder eine Synchronnabe 18 mit einer Schiebemuffe 19 und Synchronriegeln 20 angeordnet, die auf einen Sperr-Synchronring 21 einwirken können. Das Zusatzgehäuse 15 ist weiterhin mit einer Führungsbohrung 22 für eine Schaltstange 23 versehen, die eine Schaltgabel 24 trägt, mit der sie in Eingriff mit der Schiebemuffe 19 steht.

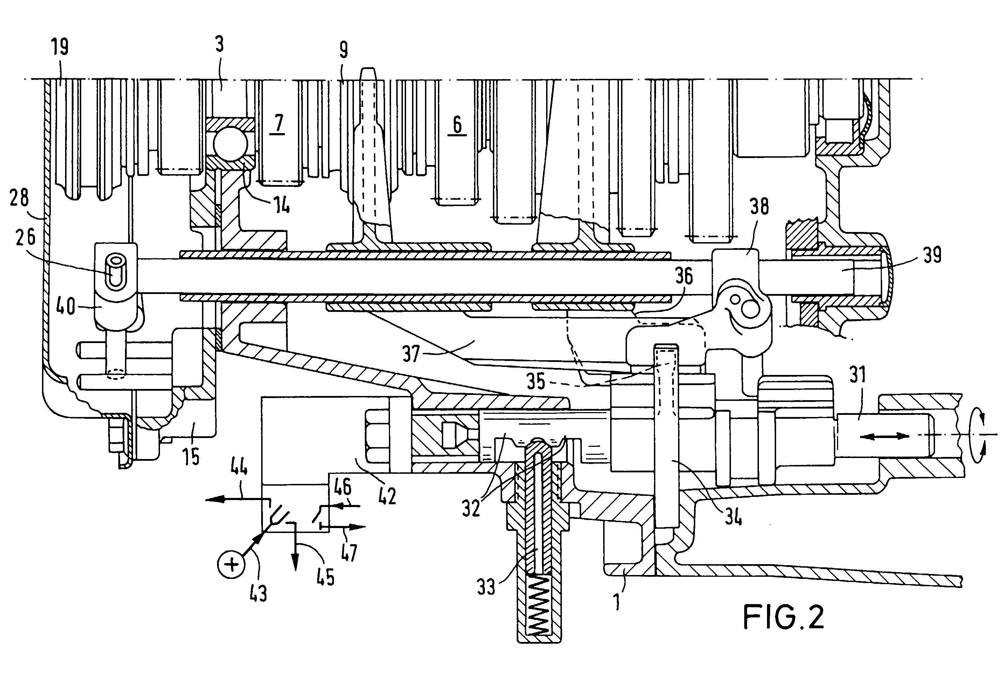

Die Schaltstange 23 mit der Schaltgabel 24 wird hierbei über einen Kulissenhebel 25 betätigt, auf den ein Bolzen 26 einwirkt, der von der Schaltwelle 39 über das freie Ende 40 verschoben wird. (Siehe Fig. 2) Der vom Bolzen 26 mitgenommene Kulissenhebel 25 nimmt hierbei über einen Bolzen 27 die Schaltstange 23 mit. Das Zusatzgehäuse 15 ist über einen Deckel 28 nach außen abgeschlossen. An der Schaltstange 23 sind noch Schaltrasten 29 vorgesehen, die mit einer Federraste 30 zusammenwirken.

In Fig. 2 ist ein weiterer Teilschnitt durch ein Kraftfahrzeug-Wechselgetriebe gezeigt, in dem die zum Schalten des fünften Ganges erforderlichen Schaltwellen sichtbar sind.

Im Getriebegehäuse 1 ist eine Schaltwelle 31 axial verschiebbar und schwenkbar angeordnet. Die Schaltwelle 31 weist Schaltrasten 32 in Verbindung mit einer Federraste 33 auf. Eine im Gehäuse axial festgelegte Sperrscheibe 34 bewegt sich mit einem Schaltfinger 35 (gestrichelt gezeigt) mit, um einen von mehreren Schaltarmen 36, 37 und 38 auszuwählen und darauffolgend axial zu verschieben.

Die Schaltarme 36 und 37 sind mit entsprechenden Hülsenansätzen auf einer Schaltstange 39 axial verschiebbar gelagert. Im Falle des fünften Ganges ist der Schaltarm 38 fest mit der im Gehäuse axial verschiebbaren Schaltstange 39 verbunden. Das freie Ende 40 der Schaltstange 39 trägt den Bolzen 26 mittels dem der Kulissenhebel 25 zum Betätigen des Rückwärtsganges betätigt werden kann.

Beim Einlegen des Rückwärtsganges kann der Bolzen 26 frei an dem Kulissenhebel 25 vorbeigeschoben werden. Dabei übernimmt die obere ebene Kante des Kulissenhebels 25 die Sperre für den fünften Gang.

Der bis hierher beschriebene Aufbau des Kraftfahrzeug-Wechselgetriebes entspricht einem bereits seit mehreren Jahren in Produktion befindlichen Getriebe, das nun mit einem möglichst geringen Aufwand eine Produktverbesserung erfahren soll, die insbesondere in einem geräuschlosen Einrücken des Rückwärtsganges und in einer verbesserten Schaltbarkeit des fünften Ganges liegen soll.

Gemäß der Erfindung wird, wie aus Fig. 1 ersichtlich, unmittelbar in der Verlängerung der die Schaltstange 23 führenden Bohrung 22 ein Elektromagnet 41 angeordnet, dessen Anker eine Druckkraft auf die Schaltstange 23 ausüben kann sobald der Elektromagnet erregt wird.

Wie aus Fig. 2 ersichtlich ist, wird in der Verlängerung der die Schaltwelle 31 führenden Bohrung ein Schalter 42 angeordnet, dessen Ein- und Ausgänge in der unmittelbar angeschlossenen Schaltsymbolbox angegeben sind.

Bei der in Fig. 2 gezeigten Neutralstellung der Schaltwelle 31 liegt ein Eingang 43 des Schalters 42 an Plus und stellt aufeinanderfolgend eine Verbindung zu einer Leitung 44 zum Elektromagneten 41 und über eine Leitung 45 zu einem Rückfahrscheinwerfer her. Eingang 46 des Schalters 42 an Plus und Ausgang 47 gibt die Neutralstellung an.

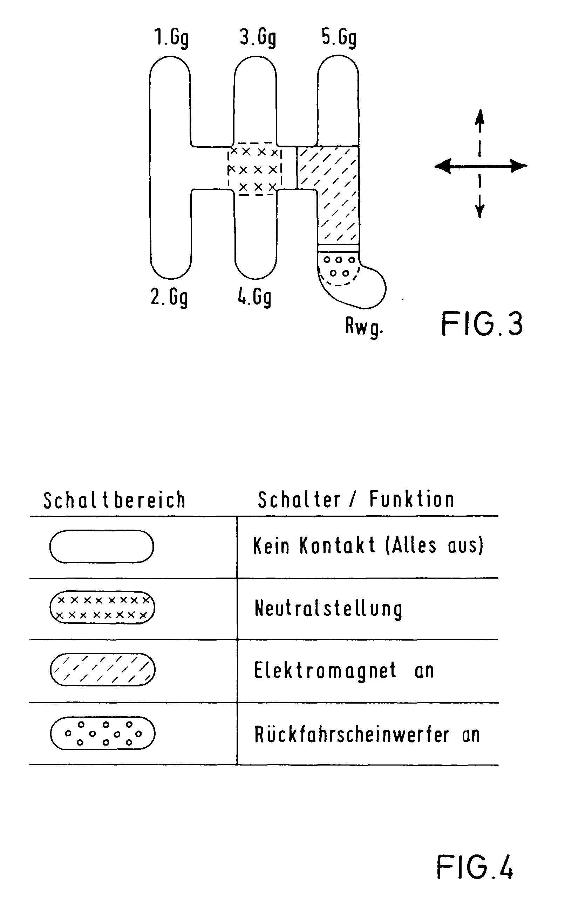

Im Zusammenhang mit den Fig. 3 und 4 wird die Funktionsweise der erfindungsgemäßen Rückwärtsgang-Schaltvorrichtung näher erläutert.

Bei der in Fig. 3 gezeigten Schaltkulisse mit Angabe der Gangstufen ist die Neutralstellung des Schalthebels in einer besonderen Weise schraffiert, wie sie aus Fig. 4 ersichtlich ist. Sobald sich der Schalthebel (nicht gezeigt) in den Bereich der Vorwahl der Schaltgasse für den fünften Gang und den Rückwärtsgang bewegt, wird ein Kontaktpaar im Schalter 42 geschlossen und der Elektromagnet 41 wird erregt.

Dadurch wird während dieser Vorwählbewegung über die Schaltstange 23, die Schaltgabel 24 und die Schaltmuffe 19 der Sperr-Synchronring 21 für den fünften Gang vorübergehend angepreßt, wodurch sich eine Abbremsung der Vorgelegewelle 3 ergibt. Wird nun der Handschalthebel weiter in Richtung Einrücken des Rückwärtsganges bewegt, so wird das ursprünglich geschlossene Kontaktpaar geöffnet und ein anderes Kontaktpaar wird geschlossen, wodurch der Rückfahrscheinwerfer eingeschaltet wird.

Wird nach einer Vorwahl der Schaltgasse für den fünften und Rückwärtsgang nicht der Rückwärtsgang sondern der fünfte Gang eingerückt, so ergibt sich durch die anfängliche Bewegung der Schaltstange 23, der Schaltgabel 24 und der Schaltmuffe 19 eine Schaltunterstützung in Richtung Einrücken des fünften Ganges, wodurch die durch den Kulissenhebel 25 und die Bolzenverbindung 26 etwas schwergängigere Schaltung in den fünften Gang an Komfort gewinnt.

## Patentansprüche

1. Rückwärtsgang-Schaltvorrichtung für ein Kraftfahrzeug-Wechselgetriebe, mit einer wdhrend eines Teiles der Schaltbewegung von einem Teil der Schaltvorrichtung betätigten Bremsvorrichtung (21) zum Abbremsen einer nachlaufenden Getriebewelle (3), wobei ein Teil der Schaltvorrichtung (31) einen Schalter (42) betätigt, der für eine bestimmte Zeitspanne einen Elektromagnet (41) betätigt und eine Kraft auf eine auf die nachlaufende Getriebewelle (3) einwirkende Bremsvorrichtung (21) aufbringt, **dadurch gekennzeichnet**, daß der Elektromagnet (41) über eine Schaltstange (23) und eine Schaltgabel (24) direkt auf eine Schiebemuffe (19) in Richtung Ansynchronisieren des Sperr-Synchronringes (21) eines Vorwärtsganges (16, 17) einwirkt,
und der die Bewegung eines Teiles der Schaltvorrichtung erfassende Schalter (42) unmittelbar an einem Ende der die Schaltbewegungen ausführenden Schaltwelle (31) angeordnet ist.

2. Schaltvorrichtung nach Anspruch 1,
**dadurch gekennzeichnet**, daß
- der die Bewegungen eines Teiles der Schaltvorrichtung erfassende Schalter (42) bereits während eines Teiles der Wählbewegung für den Rückwärtsgang betätigt wird und so der Elektromagnet (41) die Vorsynchronisationsarbeit als Schalthilfe zum Einrücken eines Vorwärtsganges zur Verfügung stellt.

## Claims

1. Reverse gear shifting device for a motor vehicle change-speed gearbox, with a braking device (21), which is operated during a part of the gearshift movement by a part of the shifting device, for braking a following gear shaft (3), wherein a part of the shifting device (31) operates a switch (42) which operates an electromagnet (41) for a certain time interval and applies a force to a braking device (21) acting on the following gear shaft,
characterised in that the electromagnet (41) acts directly via a selector rod (23) and a selector fork (24) on a sliding sleeve (19) in the synchronizing direction of the blocker synchronizing ring (21) of a forward gear (16, 17), and the switch (42) detecting the movement of a part of the shifting device is arranged directly at one end of the gearshift lever shaft (31) executing the gearshift movements.

2. Shifting device according to claim 1,
characterised in that the switch (42) detecting the movements of a part of the shifting device is operated during a part of the selection movement for reverse gear and the electromagnet (41) thus provides the presynchronizing effort as gearshift assistance for engaging a forward gear.

## Revendications

1. Dispositif de commande de marche arrière pour une boîte de vitesses de véhicule automobile, avec un dispositif de freinage (21) actionné pendant une partie du mouvement de changement de vitesse par une partie du dispositif de changement de vitesse pour freiner un arbre de transmission (3) placé en aval, une partie du dispositif de changement de vitesse (31) actionnant un commutateur (42) qui actionne pendant une durée donnée un électroaimant (41) et exerce ainsi une force sur un dispositif de freinage (21) agissant sur l'arbre de transmission (3) placé en aval,
caractérisé en ce que l'électroaimant (41), par l'intermédiaire d'une tringle de changement de vitesse (23) et d'une fourchette de sélection (24), agit directement sur un manchon coulissant (19) dans la direction de synchronisation de l'anneau synchroniseur de verrouillage (21) d'un rapport avant (16, 17), et le commutateur (42) détectant le déplacement d'une partie du dispositif de changement de vitesse est disposé directement à une extrémité de l'arbre de changement de vitesse (31) accomplissant les mouvements de changement de vitesse.

2. Dispositif de changement de vitesse selon la revendication 1,
caractérisé en ce que le commutateur (42) détectant les mouvements d'une partie du dispositif de changement de vitesse est déjà actionné pendant une partie du mouvement de sélection pour la marche arrière, de sorte que l'électroaimant (41) fournit un travail de pré-synchronisation comme aide au changement de vitesse pour l'engagement d'un rapport avant.
